# EUROPÄISCHE PATENTSCHRIFT

(11) **EP 2 780 140 B1**
(45) Veröffentlichungstag und Bekanntmachung des Hinweises auf die Patenterteilung: **29.07.2015**
(21) Anmeldenummer: 12770015.1
(22) Anmeldetag: 18.09.2012
(51) Int. Cl.: B27B 27/04, B23Q 9/00, B25H 1/00

(54) **SCHNITTLÄNGENBEGRENZUNGSVORRICHTUNG**
DEVICE FOR LIMITING THE LENGTH OF A CUT
DISPOSITIF DE LIMITATION DE LONGUEUR DE COUPE

(30) Priorität: 15.11.2011 DE 102011086334
(43) Veröffentlichungstag der Anmeldung: 24.09.2014
(73) Patentinhaber: Robert Bosch GmbH, 70442 Stuttgart (DE)
(72) Erfinder: SINZIG, Bruno, 4538 Oberbipp (CH); GRIBI, Laurent, 3294 Büren an der Aare (CH)
(86) Internationale Anmeldenummer: PCT/EP2012/068338
(87) Internationale Veröffentlichungsnummer: WO 2013/072101

(56) Entgegenhaltungen:
- DE-U1- 29 500 192
- GB-A- 2 204 528
- GB-A- 2 437 934
- US-A- 2 890 729

## Beschreibung

### Stand der Technik

Es sind bereits Schnittlängenbegrenzungsvorrichtungen für tragbare Werkzeugmaschinen bekannt, die eine Anschlageinheit umfassen, welche ein an einer Zwangsführungseinheit befestigbares Anschlagelement aufweist.

### Offenbarung der Erfindung

Die Erfindung geht aus von einer Schnittlängenbegrenzungsvorrichtung gemaß dem Oberbegriff des Patentanspruchs 1 für tragbare Werkzeugmaschinen, mit zumindest einer Anschlageinheit, die zumindest ein an einer Zwangsführungseinheit befestigbares Anschlagelement umfasst. Eine derartige Vorrichtung geht beispielsweise aus der DE 295 00 192 U1 hervor.

Die Erfindung sieht eine Schnittlängenbegrenzungsvorrichtung gemäß dem Patentanspruch 1 vor. Es wird vorgeschlagen, dass die Schnittlängenbegrenzungsvorrichtung zumindest eine Einstelleinheit umfasst, die dazu vorgesehen ist, in Abhängigkeit einer eingestellten Schnitttiefe eine einer gewollten Schnittlänge entsprechende Position des Anschlagelements einzustellen. Unter einer "Schnittlängenbegrenzungsvorrichtung" soll hier insbesondere eine Vorrichtung verstanden werden, die dazu vorgesehen ist, eine Länge, insbesondere in einer zumindest im Wesentlichen parallel zu einer Werkstückoberfläche eines Werkstücks verlaufenden Ebene betrachtet, eines mit einem mit einer tragbaren Werkzeugmaschine gekoppelten Bearbeitungswerkzeug in ein Werkstück einbringbaren Schnitts ausgehend von einem Nullpunkt auf einen von einem Bediener gewollten Wert zu begrenzen. Das Bearbeitungswerkzeug ist vorzugsweise als Kreissägeblatt ausgebildet. Unter "vorgesehen" soll insbesondere speziell ausgelegt und/oder speziell ausgestattet verstanden werden. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist.

Vorzugsweise ist die Anschlageinheit der Schnittlängenbegrenzungsvorrichtung dazu vorgesehen, mittels des Anschlagelements einen Endpunkt einer Bewegungsstrecke der tragbaren Werkzeugmaschine während einer Bewegung der tragbaren Werkzeugmaschine relativ zur Zwangsführungseinheit und/oder relativ zum Werkstück, insbesondere während einer Gleitbewegung auf einer Oberfläche der Zwangsführungseinheit und/oder auf einer Werkstückoberfläche, vorzugeben. Das Anschlagelement wird erfindungsgemäß mittels einer formschlüssigen und/oder kraftschlüssigen Verbindung mit einem Kopplungselement der Zwangsführungseinheit verbunden. Unter einer "Zwangsführungseinheit" soll hier insbesondere eine Einheit verstanden werden, die dazu vorgesehen ist, die tragbare Werkzeugmaschine bei einer Bewegung in einer Ebene, insbesondere während einer Bearbeitung des Werkstücks, entlang einer vorgegebenen Bahn mittels einer Einwirkung von zumindest einer Zwangskraft quer zu einer Bewegungsrichtung auf die tragbare Werkzeugmaschine zu führen. Der Ausdruck "Zwangskraft" soll hier insbesondere eine Kraft definieren, die dazu vorgesehen ist, einen Körper an einer Bewegung in zumindest eine Richtung zu hindern und/oder den Körper bei einer Bewegung auf einer mittels einer Einwirkung der Kraft auf den Körper vorgegebenen Bahn zu halten. Die Zwangsführungseinheit ist vorzugsweise als Führungsschiene ausgebildet, die auf dem Werkstück anordenbar ist. Das Kopplungselement der Zwangsführungseinheit ist hierbei bevorzugt als Führungssteg ausgebildet. Es ist jedoch auch denkbar, dass das Kopplungselement als Führungsnut ausgebildet ist, in die beispielsweise ein als Führungssteg ausgebildeter Führungsbereich des Anschlagelements in einem mit der Zwangsführungseinheit gekoppelten Zustand eingreifen kann.

Mittels der Einstelleinheit ist ein Endpunkt einer Bewegungsstrecke, entlang der die tragbare Werkzeugmaschine während einer Bearbeitung des Werkstücks mittels des Bearbeitungswerkzeugs, insbesondere während einer Einbringung eines Schnitts mittels des Bearbeitungswerkzeugs in das Werkstück, relativ zur Zwangsführungseinheit, insbesondere auf einer Oberfläche der Zwangsführungseinheit und/oder auf einer Werkstückoberfläche, bewegt wird, einstellbar. Bei einer Einstellung einer Position des Anschlagelements mittels der Einstelleinheit wird bevorzugt zumindest eine Kenngröße einer mittels einer Schnitttiefenbegrenzungseinheit der tragbaren Werkzeugmaschine eingestellten Schnitttiefe berücksichtigt. Es wird zumindest eine von einer Schnitttiefe abhängige Abmessung des Bearbeitungswerkzeugs, wie insbesondere ein Durchmesser des Bearbeitungswerkzeugs, berücksichtigt. Mittels der erfindungsgemäßen Ausgestaltung der Schnittlängenbegrenzungsvorrichtung kann vorteilhaft ein exaktes Einhalten einer von einem Bediener gewollten Schnittlänge eines mittels des Bearbeitungswerkzeugs, insbesondere des Kreissägeblatts, in das Werkstück einbringbaren Schnitts erreicht werden. Eine Änderung einer Schnittlänge infolge einer Änderung einer Schnitttiefe des Bearbeitungswerkzeugs kann somit vorteilhaft bei einer Einstellung einer Position des Anschlagelements zu einer Begrenzung einer Schnittlänge berücksichtigt werden. Zudem kann vorteilhaft insbesondere bei einer Verwendung der Schnittlängenbegrenzungsvorrichtung in Zusammenhang mit einer als Tauchkreissäge ausgebildeten tragbaren Werkzeugmaschine eine präzise Einhaltung einer von einem Bediener gewollten Schnittlänge während einer Bearbeitung des Werkstücks entkoppelt von einer visuellen Kontrolle zur Einhaltung einer gewollten Schnittlänge erreicht werden, da eine Einhaltung einer gewollten Schnittlänge einem Bediener durch ein taktiles und/oder akustisches Wahrnehmen eines Anschlagens der als Tauchkreissäge ausgebildeten tragbaren Werkzeugmaschine an dem Anschlagelement vorteilhaft signalisiert wird.

Des Weiteren wird vorgeschlagen, dass die Einstelleinheit zumindest ein Rastelement zu einer Positionsfixierung eines Einstellelements der Einstelleinheit in zumindest einem Betriebszustand relativ zum Anschlagelement umfasst. Bevorzugt ist das Einstellelement mittels des Rastelements in Positionen fixierbar, die einer eingestellten Schnitttiefe entsprechen. Vorzugsweise umfasst das Einstellelement zumindest einen Gegenrastbereich, der eine einer Abstufung zu einer Einstellung einer Schnitttiefe mittels der Schnitttiefenbegrenzungseinheit entsprechende Abstufung aufweist. Es ist jedoch auch denkbar, dass der Gegenrastbereich eine stufenlose Positionsfixierungsmöglichkeit des Einstellelements darstellt. Somit kann konstruktiv einfach eine Kompensation einer eingestellten Schnitttiefe bei einer Einstellung einer Position des Anschlagelements relativ zur Zwangsführungseinheit an der Zwangsführungseinheit erreicht werden.

Erfindungsgemäß umfasst die Einstelleinheit zumindest ein Einstellelement, das zumindest linear beweglich relativ zum Anschlagelement an einem Einstellpositionierelement der Einstelleinheit angeordnet ist. Vorzugsweise weist das Einstellelement einen Formschlussbereich auf, der dazu vorgesehen ist, das Einstellelement bei einer linearen Bewegung relativ zum Einstellpositionierelement zu führen. Der Formschlussbereich ist bevorzugt als Feder einer Feder-Nut-Verbindung ausgebildet. Somit greift der als Feder ausgebildet Formschlussbereich des Einstellelements vorzugsweise in einen als Nut ausgebildeten Führungsbereich des Einstellpositionierelement ein. Es ist jedoch auch denkbar, dass der Formschlussbereich des Einstellelements als Nut ausgebildet ist, in die ein als Feder ausgebildeter Führungsbereich des Einstellpositionierelements eingreift. Andere, einem Fachmann als sinnvoll erscheinende Ausgestaltungen des Formschlussbereichs und des Führungsbereichs sind ebenfalls denkbar. Mittels der erfindungsgemäßen Ausgestaltung der Einstelleinheit kann vorteilhaft eine komfortable Einstellung einer Position des Anschlagelements in Abhängigkeit einer eingestellten Schnitttiefe erfolgen. Es kann vorteilhaft mittels einer Bewegung des Einstellelements relativ zum Anschlagelement komfortabel eine von einer Schnitttiefe abhängige Länge eines mittels des Bearbeitungswerkzeugs, insbesondere des Kreissägeblatts, in das Werkstück einbringbaren Schnitts zu einer Einstellung einer einer gewollten Schnittlänge entsprechende Position des Anschlagelements berücksichtigt werden.

Besonders bevorzugt ist das Einstellpositionierelement zumindest relativ zum Anschlagelement schwenkbar gelagert. Hierbei ist das Einstellpositionierelement vorzugsweise schwenkbar am Anschlagelement gelagert. Somit kann mittels eines Schwenkvorgangs des Einstellpositionierelements eine vorteilhafte Zugänglichkeit des Anschlagelements erreicht werden, insbesondere zu einer Befestigung des Anschlagelements an der Zwangsführungseinheit. Zudem kann mittels einer Schwenkbewegung des Einstellpositionierelements relativ zum Anschlagelement eine vorteilhafte Positionierbarkeit des Anschlagelements in Abhängigkeit einer eingestellten Schnitttiefe von zumindest zwei Seiten der Zwangsführungseinheit erfolgen.

Ferner wird vorgeschlagen, dass die Schnittlängenbegrenzungsvorrichtung zumindest eine Klemmeinheit aufweist, die zumindest ein Klemmelement umfasst, das dazu vorgesehen ist, das Anschlagelement an der Zwangsführungseinheit zu fixieren. Vorzugsweise ist das Klemmelement als Klemmblech ausgebildet, das zu einer Erzeugung einer Klemmkraft mittels einer Klemmschraube auf ein stegförmiges Kopplungselement der Zwangsführungseinheit einwirkt. Mittels der erfindungsgemäßen Ausgestaltung der Schnittlängenbegrenzungsvorrichtung kann das Anschlagelement vorteilhaft mittels einer Einwirkung einer Klemmkraft sicher in einer Position relativ zur Zwangsführungseinheit an der Zwangsführungseinheit fixiert werden.

Vorzugsweise weist die Klemmeinheit zu einer Erzeugung einer Klemmkraft zu einer Fixierung des Anschlagelements an der Zwangsführungseinheit zumindest ein Bedienelement auf. Das Bedienelement ist bevorzugt als Bedienhebel ausgebildet. Es kann somit komfortabel und insbesondere werkzeuglos eine Klemmkraft zu einer Fixierung des Anschlagelements an der Zwangsführungseinheit erzeugt werden.

Ferner geht die Erfindung aus von einem Werkzeugmaschinenführungssystem, das die erfindungsgemäße Schnittlängenbegrenzungsvorrichtung und die Zwangsführungseinheit umfasst. Es kann somit vorteilhaft ein System erreicht werden, das zu einer komfortablen Einstellung einer Schnittlänge in Abhängigkeit einer eingestellten Schnitttiefe während einer Bearbeitung eines Werkstücks eingesetzt werden kann.

Vorzugsweise weist die Zwangsführungseinheit zumindest das Kopplungselement auf, an dem das Anschlagelement mittels der Klemmeinheit der Schnittlängenbegrenzungsvorrichtung befestigbar ist. Das Anschlagelement der Anschlageinheit der Schnittlängenbegrenzungsvorrichtung weist bevorzugt einen mit dem Kopplungselement der Zwangsführungseinheit korrespondierenden Führungsbereich zu einer formschlüssigen Verbindung des Anschlagelements an der Zwangsführungseinheit auf. Es kann konstruktiv einfach eine Führungsfunktion und eine Befestigungsfunktion für das Anschlagelement in einem mit der Zwangsführungseinheit gekoppelten Zustand erreicht werden.

Zudem geht die Erfindung aus von einem Werkzeugmaschinenbearbeitungssystem mit zumindest einer tragbaren Werkzeugmaschine, insbesondere einer Kreissäge, und mit zumindest einem erfindungsgemäßen Werkzeugmaschinenführungssystem. Unter einer "tragbaren Werkzeugmaschine" soll hier insbesondere eine Werkzeugmaschine, insbesondere eine Handwerkzeugmaschine, verstanden werden, die von einem Bediener transportmaschinenlos transportiert werden kann. Die tragbare Werkzeugmaschine weist insbesondere eine Masse auf, die kleiner ist als 40 kg, bevorzugt kleiner als 10 kg und besonders bevorzugt kleiner als 5 kg. Besonders bevorzugt ist die tragbare Werkzeugmaschine als Tauchkreissäge ausgebildet. Die tragbare Werkzeugmaschine weist bevorzugt zumindest eine Schnitttiefenbegrenzungseinheit auf, die dazu vorgesehen ist, eine Schnitttiefe des mit einer Werkzeugaufnahme der tragbaren Werkzeugmaschine koppelbaren Bearbeitungswerkzeugs einzustellen. Der Ausdruck "Schnitttiefenbegrenzungseinheit" soll hier insbesondere eine Einheit definieren, die dazu vorgesehen ist, eine Eintauchstrecke des mit der Werkzeugaufnahme der tragbaren Werkzeugmaschine verbundenen Bearbeitungswerkzeugs, insbesondere eines Kreissägeblatts, in ein zu bearbeitendes Werkstück zu begrenzen und/oder eine Länge der Eintauchstrecke einzustellen. Die Eintauchstrecke des Bearbeitungswerkzeugs in das zu bearbeitende Werkstück wird hierbei insbesondere entlang einer zumindest im Wesentlichen senkrecht zu einer Auflagefläche einer Auflageeinheit der tragbaren Werkzeugmaschine, mit der die tragbare Werkzeugmaschine auf einer Werkstückoberfläche eines zu bearbeitenden Werkstücks aufliegt, verlaufenden Richtung betrachtet. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Mittels der erfindungsgemäßen Ausgestaltung des Werkzeugmaschinenbearbeitungssystems kann vorteilhaft eine präzise Bearbeitung eines Werkstücks mittels der tragbaren Werkzeugmaschine erreicht werden. Zudem kann vorteilhaft ein hoher Bedienkomfort während einer Bearbeitung des Werkstücks mittels der erfindungsgemäßen Ausgestaltung des Werkzeugmaschinenbearbeitungssystems erreicht werden.

Die erfindungsgemäße Schnittlängenbegrenzungsvorrichtung, das erfindungsgemäße Werkzeugmaschinenführungssystem und/oder das erfindungsgemäße Werkzeugmaschinenbearbeitungssystem soll/sollen hierbei nicht auf die oben beschriebene Anwendung und Ausführungsform beschränkt sein. Insbesondere kann die erfindungsgemäße Schnittlängenbegrenzungsvorrichtung, das erfindungsgemäße Werkzeugmaschinenführungssystem und/oder das erfindungsgemäße Werkzeugmaschinenbearbeitungssystem zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Werkzeugmaschinenbearbeitungssystem mit einer tragbaren Werkzeugmaschine und mit einem erfindungsgemäßen Werkzeugmaschinenführungsystem während einer Bearbeitung eines Werkstücks in einer schematischen Darstellung,
- Fig. 2: eine Detailansicht des erfindungsgemäßen Werkzeugmaschinenführungsystems mit einer erfindungsgemäßen Schnittlängenbegrenzungsvorrichtung und mit einer Zwangsführungseinheit in einer schematischen Darstellung,
- Fig. 3: eine Explosionsansicht der erfindungsgemäßen Schnittlängenbegrenzungsvorrichtung in einer schematischen Darstellung,
- Fig. 4: eine Detailansicht der tragbaren Werkzeugmaschine mit einer mittels einer Schnitttiefenbegrenzungseinheit der tragbaren Werkzeugmaschine begrenzten Schnitttiefe eines mit der tragbaren Werkzeugmaschine gekoppelten Bearbeitungswerkzeugs in einer schematischen Darstellung und
- Fig. 5: eine Detailansicht der tragbaren Werkzeugmaschine mit einer mittels der Schnitttiefenbegrenzungseinheit maximal einstellbaren Schnitttiefe des mit der tragbaren Werkzeugmaschine gekoppelten Bearbeitungswerkzeugs in einer schematischen Darstellung.

### Beschreibung des Ausführungsbeispiels

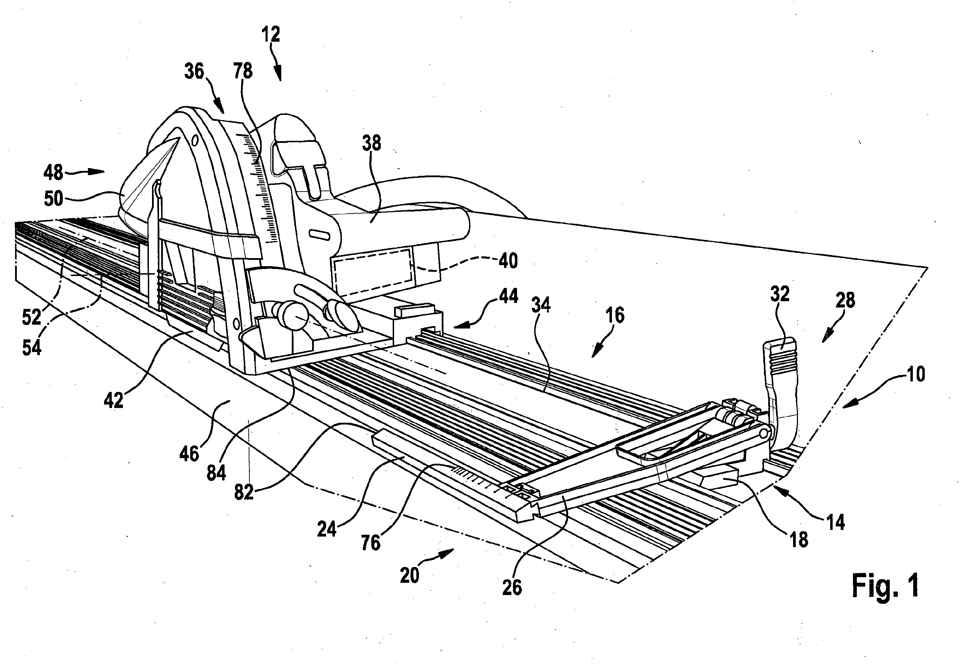

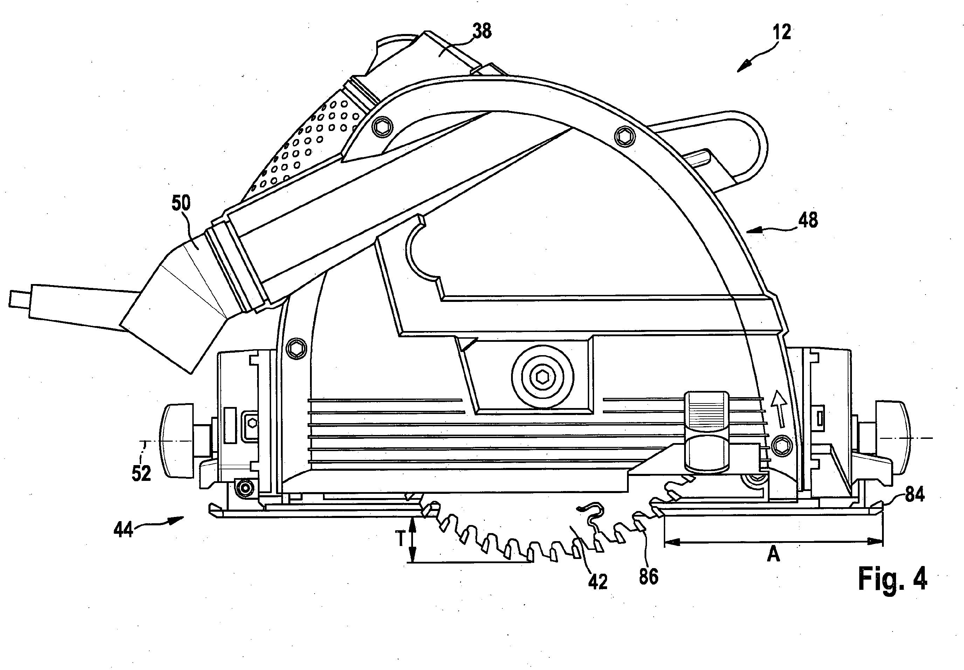

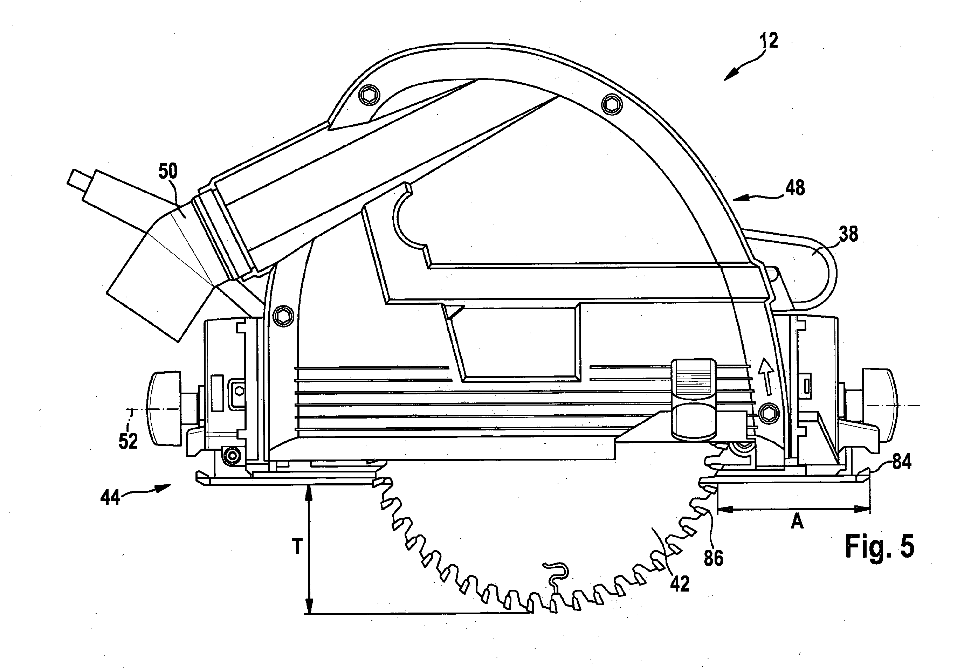

Figur 1 zeigt ein Werkzeugmaschinenbearbeitungssystem, das zumindest eine als Tauchkreissäge ausgebildete tragbare Werkzeugmaschine 12 und zumindest ein Werkzeugmaschinenführungssystem umfasst, das eine Schnittlängenbegrenzungsvorrichtung 10 und eine Zwangsführungseinheit 16 aufweist. Die als Tauchkreissäge ausgebildete tragbare Werkzeugmaschine 12 umfasst eine Schnitttiefenbegrenzungseinheit 36, die dazu vorgesehen ist, eine Schnitttiefe eines mit einer Werkzeugaufnahme (hier nicht näher dargestellt) der tragbaren Werkzeugmaschine 12 koppelbaren Bearbeitungswerkzeugs 42 (Figuren 4 und 5) einzustellen. Mittels einer Einstellung einer Position eines Begrenzungselements (hier nicht näher dargestellt) kann eine Schnitttiefe T des Bearbeitungswerkzeugs 42 auf eine, einem Fachmann bereits bekannte Art und Weise eingestellt werden. Die tragbare Werkzeugmaschine 12 umfasst ferner ein Werkzeugmaschinengehäuse 38, das dazu vorgesehen ist, eine Antriebseinheit 40 der tragbaren Werkzeugmaschine 12 zu umschließen. Die Antriebseinheit 40 umfasst eine Antriebswelle (hier nicht näher dargestellt) zu einem Antrieb des mit der Werkzeugaufnahme (hier nicht näher dargestellt) koppelbaren Bearbeitungswerkzeugs 42 auf eine, einem Fachmann bereits bekannte Art und Weise. Ferner umfasst die tragbare Werkzeugmaschine 12 eine als Grundplatte oder als Gleitschuh ausgebildete Auflageeinheit 44 mit der die tragbare Werkzeugmaschine 12 bei einer Bearbeitung eines Werkstücks 46 auf einer Werkstückoberfläche des Werkstücks 46 oder auf einer Oberfläche der Zwangsführungseinheit 16 aufliegt bzw. bei einer Bewegung zu einer Einbringung eines Schnitts in das Werkstück 46 auf der Werkstückoberfläche oder der Oberfläche der Zwangsführungseinheit 16 gleitet. Die Auflageeineheit 44 ist hierbei auf eine, einem Fachmann bereits bekannte Art und Weise mit der Zwangsführungseinheit 16 koppelbar. An der Auflageeinheit 44 ist zudem eine Schutzeinheit 48 der tragbaren Werkzeugmaschine 12 angeordnet, die einen Bediener vor Verletzungen bei einer Bearbeitung des Werkstücks 46 schützt. Hierbei ist die Schutzeinheit 48 als Schutzhaube ausgebildet, die das Bearbeitungswerkzeug 42 in einem montierten Zustand entlang einer Rotationsrichtung der Antriebswelle um mehr als 160° umschließt. Die Schutzeinheit 48 weist ferner ein Absaugkopplungselement 50 auf, das mit einer Absaugeinheit (hier nicht näher dargestellt) zu einer Absaugung von abgetragenen Werkstückpartikeln während einer Bearbeitung des Werkstücks 46 verbindbär ist. Das Werkzeugmaschinengehäuse 38 ist relativ zur Auflageeinheit 44 schwenkbar an der Schutzeinheit 48 gelagert. Hierbei ist das Werkzeugmaschinengehäuse 38 auf eine, einem Fachmann bereits bekannte Art und Weise schwenkbar um zwei Schwenkachsen 52, 54 relativ zur Auflageeinheit 44 an der Schutzeinheit 48 gelagert. Die zwei Schwenkachsen 52, 54 erstrecken sich zumindest im Wesentlichen senkrecht relativ zueinander. Die Schutzeinheit 48 ist herbei zusammen mit dem Werkzeugmaschinengehäuse 38 schwenkbar um die Schwenkachse 52 relativ zur Auflageeinheit 44 an der Auflageeinheit 44 gelagert. Zudem ist die Schnitttiefenbegrenzungseinheit 36 an einer dem Werkzeugmaschinengehäuse 38 zugewandten Seite der Schutzeinheit 48 angeordnet. Somit weist die tragbare Werkzeugmaschine 12 zumindest im Wesentlichen eine, einem Fachmann bereits bekannte Ausgestaltung auf.

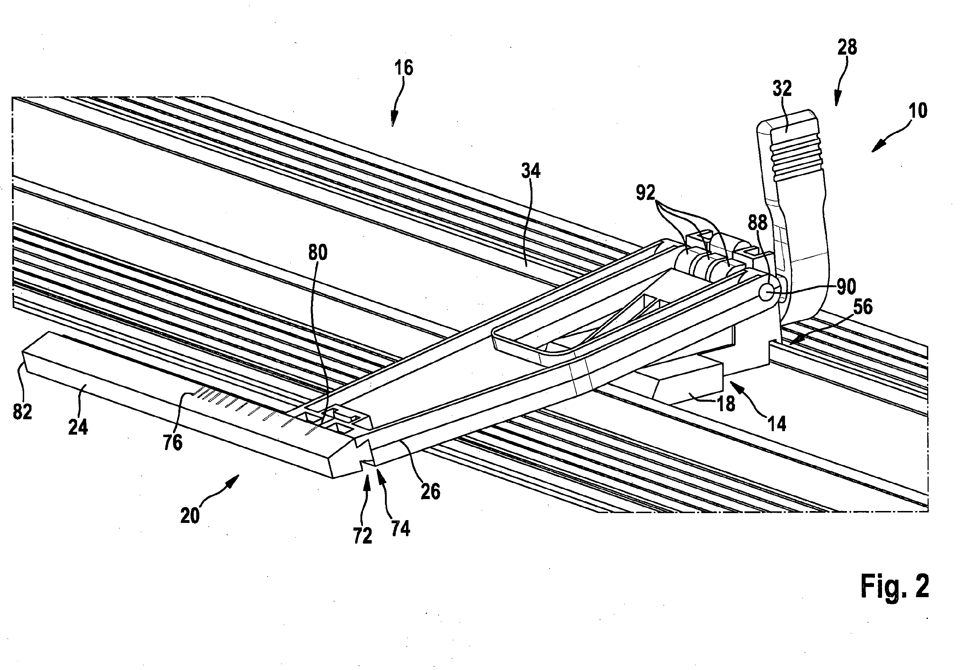

Figur 2 zeigt das Werkzeugmaschinenführungssystem mit zumindest der Schnittlängenbegrenzungsvorrichtung 10 und mit zumindest der Zwangsführungseinheit 16. Die Zwangsführungseinheit 16 ist als Führungsschiene ausgebildet. Die Schnittlängenbegrenzungsvorrichtung 10 für die tragbare Werkzeugmaschine 12 weist zumindest eine Anschlageinheit 14 auf, die zumindest ein an der Zwangsführungseinheit 16 befestigbares Anschlagelement 18 umfasst. Das Anschlagelement 18 weist zu einer Befestigung an der Zwangsführungseinheit 16 einen Führungsbereich 56 auf. Der Führungsbereich 56 wird hierbei von einer Nut gebildet. Die Zwangsführungseinheit 16 umfasst zu einem Zusammenwirken mit dem als Nut ausgebildeten Führungsbereich 56 ein Kopplungselement 34. Das Kopplungselement 34 ist als Steg ausgebildet, der sich an einer bei einer auf dem Werkstück 46 aufgelegten Zwangsführungseinheit 16 an einer dem Werkstück 46 abgewandten Seite der Zwangsführungseinheit 16 zumindest im Wesentlichen senkrecht in eine von der Zwangsführungseinheit 16 abgewandte Richtung erstreckt. Das Kopplungselement 34 weist einen zumindest im Wesentlichen polygonalen Querschnitt auf, der korrespondierend mit dem als Nut ausgebildeten Führungsbereich 56 ausgestaltet ist. In einem auf der Zwangsführungseinheit 16 montierten Zustand des Anschlagelements 18 greift das Kopplungselement 34 in den als Nut ausgebildeten Führungsbereich 56 zu einer Führung des Anschlagelements 18 ein.

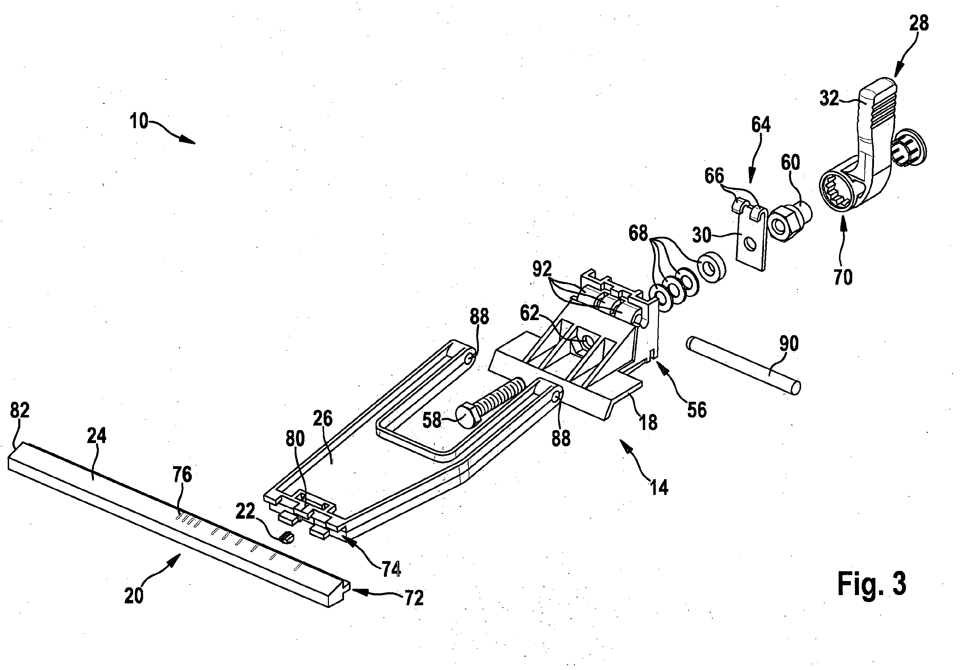

Zu einer Fixierung des Anschlagelements 18 umfasst die Schnittlängenbegrenzungsvorrichtung 10 zumindest eine Klemmeinheit 28, die zumindest ein Klemmelement 30 aufweist, das dazu vorgesehen ist, das Anschlagelement 18 an der Zwangsführungseinheit 16 zu fixieren. Das Klemmelement 30 ist hierbei als Klemmblech ausgebildet (Figur 3). Das als Klemmblech ausgebildete Klemmelement 30 ist mittels einer Klemmschraube 58 und einer Klemmmutter 60 der Klemmeinheit 28 verspannbar am Anschlagelement 18 angeordnet. Das Anschlagelement 18 weist eine Klemmschraubenaufnahme 62 auf, in der die Klemmschraube 58 drehfest anordenbar ist. Eine Innenkontur der Klemmschraubenaufnahme 62 ist korrespondierend mit einem Schraubenkopf der Klemmschraube 58 ausgebildet. Die Klemmmutter 60 ist auf einer dem Schraubenkopf der Klemmschraube 58 abgewandten Seite der Klemmschraube 58 auf ein Gewinde der Klemmschraube 58 aufschraubbar. Zudem ist das als Klemmblech ausgebildete Klemmelement 30 ebenfalls auf der dem Schraubenkopf der Klemmschraube 58 abgewandten Seite der Klemmschraube 58 angeordnet. Das Klemmelement 30 weist einen Kopplungsbereich 64 auf, der dazu vorgesehen ist, das Klemmelement 30 schwenkbar an dem Anschlagelement 18 anzuordnen. Der Kopplungsbereich 64 weist zwei hakenförmige Fortsätze 66 auf, die mit einem Aufnahmebereich des Anschlagelements 18 koppelbar sind. Das Klemmelement 30 ist in einem montierten Zustand entlang einer Schraubenachse der Klemmschraube 58 betrachtet zwischen dem Anschlagelement 18, Distanzscheiben 68 der Klemmeinheit 28 und der Klemmmutter 60 angeordnet, wobei der Kopplungsbereich 64 des Klemmelements 30 mit dem Aufnahmebereich des Anschlagelements 18 verbunden ist. Zu einer Erzeugung einer Klemmkraft zu einer Fixierung des Anschlagelements 18 an der Zwangsführungseinheit 16 weist die Klemmeinheit 28 zumindest ein Bedienelement 32 auf. Das Bedienelement 32 ist als Bedienhebel ausgebildet. Hierbei weist das Bedienelement 32 einen Drehmitnahmebereich 70 auf, der dazu vorgesehen ist, in einem montierten Zustand die Klemmmutter 60 zu einer Übertragung eines Drehmoments formschlüssig zu umgreifen.

Die Zwangsführungseinheit 16 weist zumindest das Kopplungselement 34 auf, an dem das Anschlagelement 18 mittels einer Klemmeinheit 28 der Schnittlängenbegrenzungsvorrichtung 10 befestigbar ist. Hierbei wird der Führungsbereich 56 des Anschlagelements 18 und das Kopplungselement 34 der Zwangsführungseinheit 16 formschlüssig miteinander verbunden. Anschließend wird infolge einer Betätigung des Bedienelements 32 eine Klemmkraft zur Fixierung des Anschlagelements 18 am Kopplungselement 34 relativ zur Zwangsführungseinheit 16 erzeugt. Hierbei wird das Kopplungselement 34 infolge eines Zusammenwirkens des Klemmelements 30 und des Führungsbereichs 56 zwischen dem Klemmelement 30 und einem den Führungsbereich 56 begrenzenden Randbereich des Anschlagelements 18 mittels einer Klemmkraft eingeklemmt. Hierdurch wird das Anschlagelement 18 zu einer Bildung eines Anschlags bei einer Bewegung der tragbaren Werkzeugmaschine 12 auf der Zwangsführungseinheit 16 zu einer Begrenzung einer von einem Bediener gewollten Schnittlänge am Kopplungselement 34 fixiert.

Des Weiteren umfasst die Schnittlängenbegrenzungsvorrichtung 10 zumindest eine Einstelleinheit 20, die dazu vorgesehen ist, in Abhängigkeit einer eingestellten Schnitttiefe T eine einer gewollten Schnittlänge entsprechende Position des Anschlagelements 18 einzustellen. Die Einstelleinheit 20 umfasst zumindest ein Einstellelement 24, das zumindest linear beweglich relativ zum Anschlagelement 18 an einem Einstellpositionierelement 26 der Einstelleinheit 20 angeordnet ist. Das Einstellelement 24 weist hierbei einen Formschlussbereich 72 auf, der dazu vorgesehen ist, das Einstellelement 24 bei einer linearen Bewegung relativ zum Einstellpositionierelement 26 zu führen. Der Formschlussbereich 72 ist als Feder einer Feder-Nut-Verbindung ausgebildet. Somit greift der als Feder ausgebildet Formschlussbereich 72 des Einstellelements 24 in einen als Nut ausgebildeten Führungsbereich 74 des Einstellpositionierelements 26 ein. Das Einstellpositionierelement 26 ist zumindest relativ zum Anschlagelement 18 schwenkbar gelagert. Hierbei weist das Einstellpositionierelement 26 Lagerausnehmungen 88 auf, in die ein Lagerbolzen 90 der Einstelleinheit 20 eingreift. Das Anschlagelement 18 umfasst zur Aufnahme des Lagerbolzens 90 Lagerelemente 92, die dazu vorgesehen sind, den Lagerbolzen 90 in einem montierten Zustand aufzunehmen. Somit ist das Einstellpositionierelement 26 schwenkbar am Anschlagelement 18 gelagert.

Ferner weist das Einstellelement 24 eine Maßskala 76 auf, die in Abhängigkeit einer Maßskala 78 der Schnitttiefenbegrenzungseinheit 36 ausgebildet ist. Zu einem Einstellen einer Position des Einstellelements 24 relativ zum Anschlagelement 18 wird das Einstellelement 24 linear relativ zum Anschlagelement 18 und linear relativ zum Einstellpositionierelement 26 bewegt, bis eine Position der Maßskala 76 des Einstellelements 24 einer mittels der Maßskala 78 der Schnitttiefenbegrenzungseinheit 36 eingestellten Schnitttiefe T des Bearbeitungswerkzeugs 42 entspricht. Zu einem Ablesen der Maßskala 76 des Einstellelements 24 weist das Einstellpositionierelement 26 ein Anzeigeelement 80 auf. Zu einer Positionsfixierung des Einstellelements 24 der Einstelleinheit 20 relativ zum Einstellpositionierelement 26 und/oder relativ zum Anschlagelement 18 weist die Einstelleinheit 20 zumindest ein Rastelement 22 auf. Nach einer Bewegung des Einstellelements 24 relativ zum Anschlagelement 18 und relativ zum Einstellpositionierelement 26 kann das Einstellelement 24 somit relativ zum Einstellpositionierelement 26 fixiert werden. Das Einstellelement 24 ist dazu vorgesehen, bei einer Einstellung einer einer gewollten Schnittlänge entsprechenden Position des Anschlagelements 18 an der Zwangsführungseinheit 16 einen von einer Schnitttiefe T des Bearbeitungswerkzeugs 42 abhängigen Abstand A von einer Außenkante 84 der Auflageeinheit 44 zu einer bei einer Bearbeitung des Werkstücks 46 nutzbaren Schnittkante 86 des Bearbeitungswerkzeugs 42 zu berücksichtigen bzw. zu kompensieren (Figuren 4 und 5).

Für eine Bearbeitung des Werkstücks 46 mittels des Werkzeugmaschinenbearbeitungssystems wird zuerst eine Schnitttiefe T des Bearbeitungswerkzeugs 42 mittels der Schnitttiefenbegrenzungseinheit 36 eingestellt. Die eingestellte Schnitttiefe T kann anhand der Maßskala 78 der Schnitttiefenbegrenzungseinheit 36 abgelesen werden. Anhand der von der Maßskala 78 der Schnitttiefenbegrenzugseinheit 36 abgelesenen Schnitttiefe T wird das Einstellelement 24 linear relativ zum Anschlagelement 18 und linear relativ zum Einstellpositionierelement 26 bewegt, bis das Anzeigeelement 80 des Einstellpositionierelements 26 auf der Maßskala 76 des Einstellelements 24 einen von der Maßskala 78 der Schnitttiefenbegrenzungseinheit 36 abgelesenen Wert anzeigt. Daraufhin wird das Einstellelement 24 mittels des Rastelements 22 der Einstelleinheit 20 in einer Position relativ zum Einstellpositionierelement 26 fixiert. Das Anschlagelement 18 wird mit der bereits auf dem Werkstück 46 angeordneten Zwangsführungseinheit 16 gekoppelt. Das Anschlagelement 18 wird entlang des Kopplungselements 34 verschoben, bis eine dem Anschlagelement 18 abgewandte Seitenkante 82 des Einstellelements 24 bündig zu einer auf dem Werkstück 46 angebrachten Markierung (hier nicht näher dargestellt), die dazu vorgesehen ist, ein Ende eines gewünschten Schnitts auf eine, einem Fachmann bekannte Art und Weise angeordnet ist, anzuzeigen. Es ist jedoch auch denkbar, dass bei einem Anordnen des Anschlagelements 18 an dem Kopplungselement 34 bereits die Seitenkante 82 des Einstellelements 24 bündig zur Markierung angeordnet wird. Nachdem die Seitenkante 82 des Einstellelements 24 bündig mit der Markierung angeordnet ist, wird das Anschlagelement 18 mittels der Klemmeinheit 28 an der Zwangsführungseinheit 16 fixiert. Das Einstellpositionierelement 26 kann infolge der schwenkbaren Lagerung am Anschlagelement 18 weg geschwenkt werden, um eine präzises Anschlagen der Außenkante 84 der Auflageeinheit 44 zu ermöglichen. Figuren 4 und 5 zeigen eine Abhängigkeit der Schnitttiefe T zum Abstand A von der Außenkante 84 der Auflageeinheit 44 zur während einer Bearbeitung des Werkstücks 46 nutzbaren Schnittkante 86 des Bearbeitungswerkzeugs 42. Der Abstand A ist somit abhängig wie weit das Bearbeitungswerkzeug 42 während der Bearbeitung des Werkstücks 46 zur Einbringung eines Schnitts in das Werkstück 46 eintauchen kann. In Figur 5 ist ein Wert des Abstands A im Vergleich zu einem Wert des Abstands A in Figur 4 kleiner. Somit ist auch die Schnittlänge, die mittels einer Position des Anschlagelements 18 einstellbar ist abhängig von der Änderung des Abstands A bzw. von der Änderung der Schnitttiefe T. Ein Abstand der Seitenkante 82 des Einstellelements 24 relativ zum Anschlagelement 18 entspricht in Abhängigkeit einer eingestellten Position des Einstellelements 24 relativ zum Einstellpositionierelement 26 und somit relativ zum Anschlagelement 18 dem von einer eingestellten Schnitttiefe T abhängigen Abstand A von der Außenkante 84 der Auflageeinheit 44 zur während einer Bearbeitung des Werkstücks 46 nutzbaren Schnittkante 86 des Bearbeitungswerkzeugs 42.

## Patentansprüche

1. Schnittlängenbegrenzungsvorrichtung für tragbare Werkzeugmaschinen (12), mit zumindest einer Anschlageinheit (14), die zumindest ein an einer Zwangsführungseinheit (16) befestigbares Anschlagelement (18) umfasst, wobei das Anschlagelement (18) mittels einer formschlüssigen und/oder kraftschlüssigen Verbindung mit einem Kopplungselement (34) der Zwangsführungseinheit verbindbar ist,
**gekennzeichnet durch** zumindest eine Einstelleinheit (20), die dazu vorgesehen ist, in Abhängigkeit einer eingestellten Schnitttiefe (T) eine einer gewollten Schnittlänge entsprechende Position des Anschlagelements (18) an der Zwangsführungseinheit (16) einzustellen, wobei die Einstelleinheit (20) zumindest ein Einstellelement (24) umfasst, das zumindest linear beweglich relativ zum Anschlagelement (18) an einem Einstellpositionierelement (26) der Einstelleinheit (20) angeordnet ist.

2. Schnittlängenbegrenzungsvorrichtung nach Anspruch 1, **dadurch gekennzeichnet, dass** die Einstelleinheit (20) zumindest ein Rastelement (22) zu einer Positionsfixierung eines Einstellelements (24) der Einstelleinheit (20) in zumindest einem Betriebszustand relativ zum Anschlagelement (18) umfasst.

3. Schnittlängenbegrenzungsvorrichtung nach einem der vorhergehenden Ansprüche, **dadurch gekennzeichnet, dass** das Einstellpositionierelement (26) zumindest relativ zum Anschlagelement (18) schwenkbar gelagert ist.

4. Schnittlängenbegrenzungsvorrichtung nach einem der vorhergehenden Ansprüche, **gekennzeichnet durch** zumindest eine Klemmeinheit (28), die zumindest ein Klemmelement (30) umfasst, das dazu vorgesehen ist, das Anschlagelement (18) an der Zwangsführungseinheit (16) zu fixieren.

5. Schnittlängenbegrenzungsvorrichtung nach Anspruch 4, **dadurch gekennzeichnet, dass** die Klemmeinheit (28) zu einer Erzeugung einer Klemmkraft zu einer Fixierung des Anschlagelements (18) an der Zwangsführungseinheit (16) zumindest ein Bedienelement (32) aufweist.

6. Werkzeugmaschinenführungssystem mit zumindest einer Schnittlängenbegrenzungsvorrichtung nach einem der vorhergehenden Ansprüche und mit zumindest einer Zwangsführungseinheit (16).

7. Werkzeugmaschinenführungssystem nach Anspruch 6, **dadurch gekennzeichnet, dass** die Zwangsführungseinheit (16) zumindest das Kopplungselement (34) aufweist, an dem das Anschlagelement (18) mittels einer Klemmeinheit (28) der Schnittlängenbegrenzungsvorrichtung befestigbar ist.

8. Werkzeugmaschinenbearbeitungssystem mit zumindest einer tragbaren Werkzeugmaschine (12), insbesondere Kreissäge, und mit zumindest einem Werkzeugmaschinenführungssystem nach Anspruch 6 oder 7, **dadurch gekennzeichnet, dass** das Einstellelement (24) dazu vorgesehen ist, bei einer Einstellung einer einer gewollten Schnittlänge entsprechenden Position des Anschlagelements (18) an der Zwangsführungseinheit (16) einen von einer Schnitttiefe (T) eines Bearbeitungswerkzeugs (42) abhängigen Abstand (A) von einer Außenkante (84) einer Auflageeinheit (44) der tragbaren Werkzeugmaschine (12) zu einer bei einer Bearbeitung eines Werkstücks (46) nutzbaren Schnittkante (86) des Bearbeitungswerkzeugs (42) zu berücksichtigen.

## Claims

1. Cut-length limiting device for portable power tools (12), having at least one stop unit (14), which comprises at least one stop element (18) that can be fastened to a constraining guide unit (16), wherein the stop element (18) can be connected to a coupling element (34) of the constraining guide unit by means of a form-closed and/or force-closed connection, **characterized by** at least one setting unit (20), which is provided to set a position of the stop element (18) on the constraining guide unit (16) that corresponds to a required length of cut, in dependence on a set depth of cut (T), wherein the setting unit (20) comprises at least one setting element (24), which is disposed on a setting positioning element (26) of the setting unit (20) so as to be movable at least linearly relative to the stop element (18).

2. Cut-length limiting device according to Claim 1, **characterized in that** the setting unit (20) comprises at least one latching element (22), for fixing a position of a setting element (24) of the setting unit (20) relative to the stop element (18), in at least one operating state.

3. Cut-length limiting device according to either one of the preceding claims, **characterized in that** the setting positioning element (26) is mounted so as to be pivotable, at least relative to the stop element (18).

4. Cut-length limiting device according to any one of the preceding claims, **characterized by** at least one clamping unit (28), which comprises at least one clamping element (30) that is provided to fix the stop element (18) to the constraining guide unit (16).

5. Cut-length limiting device according to Claim 4, **characterized in that** the clamping unit (28) has at least one operating element (32) for generating a clamping force for fixing the stop element (18) to the constraining guide unit (16).

6. Power tool guide system, having at least one cut-length limiting device according to any one of the preceding claims, and having at least one constraining guide unit (16).

7. Power tool guide system according to Claim 6, **characterized in that** the constraining guide unit (16) has at least the coupling element (34), to which the stop element (18) can be fastened by means of the clamping unit (28) of the cut-length limiting device.

8. Power tool working system, having at least one portable power tool (12), in particular a circular saw, and having at least one power tool guide system according to Claim 6 or 7, **characterized in that** the setting element (24) is provided to take account of a distance (A), dependent on a depth of cut (T) of a working tool (42), from an outside edge (84) of a seating unit (44) of the portable power tool (12) to a cutting edge (86) of the working tool (42) that is usable during working on a workpiece (46), in a setting of a position of the stop element (18) on the constraining guide unit (16) that corresponds to a required length of cut.

## Revendications

1. Dispositif de limitation de longueur de coupe pour des machines-outils portatives (12), comprenant au moins une unité de butée (14) qui comprend au moins un élément de butée (18) pouvant être fixé à une unité de guidage forcé (16), l'élément de butée (18) pouvant être connecté au moyen d'une connexion par engagement par correspondance de formes et/ou par force à un élément de couplage (34) de l'unité de guidage forcé,
**caractérisé par** au moins une unité d'ajustement (20) qui est prévue pour ajuster, en fonction d'une profondeur de coupe ajustée (T), une position de l'élément de butée (18) correspondant à une longueur de coupe voulue au niveau de l'unité de guidage forcé (16), l'unité d'ajustement (20) comprenant au moins un élément d'ajustement (24) qui est disposé au moins de manière déplaçable linéairement par rapport à l'élément de butée (18) au niveau d'un élément de positionnement d'ajustement (26) de l'unité d'ajustement (20).

2. Dispositif de limitation de longueur de coupe selon la revendication 1, **caractérisé en ce que** l'unité d'ajustement (20) comprend au moins un élément d'encliquetage (22) pour une fixation en position d'un élément d'ajustement (24) de l'unité d'ajustement (20) dans au moins un état de fonctionnement par rapport à l'élément de butée (18).

3. Dispositif de limitation de longueur de coupe selon l'une quelconque des revendications précédentes, **caractérisé en ce que** l'élément de positionnement d'ajustement (26) est supporté de manière pivotante au moins par rapport à l'élément de butée (18).

4. Dispositif de limitation de longueur de coupe selon l'une quelconque des revendications précédentes, **caractérisé par** au moins une unité de serrage (28) qui comprend au moins un élément de serrage (30) qui est prévu pour fixer l'élément de butée (18) au niveau de l'unité de guidage forcé (16).

5. Dispositif de limitation de longueur de coupe selon la revendication 4, **caractérisé en ce que** l'unité de serrage (28), pour générer une force de serrage en vue d'une fixation de l'élément de butée (18) au niveau de l'unité de guidage forcé (16), présente au moins un élément de commande (32).

6. Système de guidage de machine-outil comprenant au moins un dispositif de limitation de longueur de coupe selon l'une quelconque des revendications précédentes et au moins une unité de guidage forcé (16).

7. Système de guidage de machine-outil selon la revendication 6, **caractérisé en ce que** l'unité de guidage forcé (16) présente au moins l'élément de couplage (34) au niveau duquel l'élément de butée (18) peut être fixé au moyen d'une unité de serrage (28) du dispositif de limitation de longueur de coupe.

8. Système d'usinage d'une machine-outil comprenant au moins une machine-outil portative (12), en particulier une scie circulaire, et comprenant au moins un système de guidage de machine-outil selon la revendication 6 ou 7, **caractérisé en ce que** l'élément d'ajustement (24), lors d'un ajustement d'une position de l'élément de butée (18) correspondant à une longueur de coupe voulue au niveau de l'unité de guidage forcé (16), est prévu pour prendre en compte une distance (A) dépendant d'une profondeur de coupe (T) d'un outil d'usinage (42) entre une arête extérieure (84) d'une unité d'appui (44) de la machine-outil portative (12) et une arête de coupe (86) de l'outil d'usinage (42) pouvant être utilisée lors d'un usinage d'une pièce (46).
